# EUROPEAN PATENT SPECIFICATION

(11) **EP 2 868 463 B1**
(45) Date of publication and mention of the grant of the patent: **21.03.2018**
(21) Application number: 14189829.6
(22) Date of filing: 22.10.2014
(51) Int. Cl.: B29D 30/24

(54) **Tire building drum**
Reifenbautrommel
Tambour servant à fabriquer des pneus

(30) Priority: 29.10.2013 US 201314065868
(43) Date of publication of application: 06.05.2015
(73) Proprietor: The Goodyear Tire & Rubber Company, Akron, Ohio 44316 (US)
(72) Inventor: Weaver, Douglas Raymond, Uniontown, OH Ohio 44685 (US); Kavali, Jeffrey Joseph, Ravenna, OH Ohio 44266 (US)
(74) Representative: Kutsch, Bernd

(56) References cited:
- EP-A1- 0 020 283
- EP-A1- 1 674 248
- EP-A1- 2 572 872
- EP-A2- 0 432 993
- WO-A1-2006/103434
- DE-A1- 2 626 553
- JP-A- S5 675 848

## Description

### Field of the Invention

The invention relates to tire building, and more particularly to a tire building drum.

### Background of the Invention

The manufacture of tires typically involves a tire building drum wherein numerous tire components are applied to the drum in sequence, forming a cylindrical shaped tire carcass. This stage of the tire building process is commonly referred to as the "first stage" of the tire building process. The tire carcass is then typically removed from the tire building drum and sent to a second stage, expandable tire shaping drum where the carcass is expanded into a toroidal shape for receipt of the remaining components of the tire such as the belt package and a rubber tread. The completed toroidally shape unvulcanized tire carcass or green tire is then removed from the second stage drum and subsequently molded and vulcanized into a finished tire.

The prior art process thus requires two tire building drums and the transfer of the carcass from one drum to the other. Further, a problem often arises in precisely locating and anchoring the tire beads on the unvulcanized tire carcass, especially during the transportation of the tire beads from the first stage drum to the second stage drum. Variations in bead positioning can result in ply distortion in the tire.

Tire manufacturers have recently begun moving towards the utilization of a single tire building drum, for both the first and second stage tire building. This requires that the tire building drum be capable of axial expansion and contraction as well as radial expansion/contraction. Further, it is important to maintain a positive bead lock during the entire tire building process, including the tire shaping, so that the ply cord length is maintained, resulting in good tire uniformity. Due to the fact that the tire building drum axially and radially expands, it is important that both sides of the tire building drum move in synchronization. If one side of the drum is out of synchronization with the other side of the drum, problems in tire uniformity can occur. It is additionally desired to support the apex and bead assembly in a vertical manner while avoiding unwanted displacements of the tire components, particularly the ply.

EP-A-1 674 248 describes a high crown single stage tire building drum in accordance with the preamble of claim 1.

DE-A-26 26 553 describes a tire building drum comprising a segment expansion mechanism comprising ring shaped springs.

JP-56-75848 describes a cylindrical molding equipment having a drum unit that may be used for the molding of green tires. A cylindrical body comprising arc segments is provided. Coil springs are used to connect support members of the cylindrical body and plate portions on the one hand side and an installing ring fixed to an attachment component on the other hand side.

### Summary of the Invention

The invention relates to a tire building drum in accordance with claim 1.

Dependent claims refer to preferred embodiments of the invention.

In one aspect, the invention provides a tire building drum including a rotatable drum. The rotatable drum has a center section and left section and right section, wherein the right and left sections are movable in the axial direction. The center section is radially expandable, and the center section further includes a first half and a second half, wherein the first half and the second half are axially movable with respect to each other so that the center section has an adjustable width. The right and left sections have a radially expandable bead lock mechanism, wherein the bead lock mechanisms are axially movable independent of each other.

In a second aspect, the invention provides a tire building drum including a rotatable drum having a center section and a right and left section, wherein the right and left section are each located adjacent the center section, wherein the right and left sections each have a radially expandable bead lock mechanism mounted on a sliding cylinder, wherein the bead lock mechanisms are axially movable independent of each other, wherein the ends of the center section are each connected to a plurality of radially expandable lifter housings, wherein each lifter housing is connected to a linkage system, and wherein the sliding cylinder has a front face positioned for engagement with the linkage system causing the lifter system to radially expand and the radial expansion of the center section.

The first half and the second half of the center section are each connected to a plurality of lifter housings, wherein each lifter housing is radially expandable. Each lifter housing is connected to a linkage system.

In a preferred aspect of the invention, a sliding cylinder having a front face may engage the linkage system and rotates a first linkage radially outward.

In a preferred aspect of the invention, the linkage system may include a first link having a first end pivotally connected to the lifter housing and a second end pivotally connected to the first end of a second link, wherein the second end of the second link is pivotally connected to a fixed point.

A spring biases the lifter housing radially inward.

In a preferred aspect of the invention, the bead lock mechanism may be mounted on the sliding cylinder.

In a preferred aspect of the invention, the bead lock mechanism may have a radially inward roller positioned for engagement with a piston.

In a preferred aspect of the invention, the piston may be slidably mounted in a chamber, wherein the chamber is mounted on the slidable cylinder.

In a preferred aspect of the invention, the center section does not have a center sleeve that extends the full width of the center section.

In a preferred aspect of the invention, a shoulder sleeve may be located on each axially outer end of the center section, but does not extend over the center section.

In a preferred aspect of the invention, the sliding sleeve may slide on an inner drum sleeve.

In a preferred aspect of the invention, the sliding sleeve may engage the second link of the linkage system wherein the second link is rotated about the fixed point.

### Definitions

For ease of understanding this disclosure, the following items are defined:
"Axial" and "axially" means the lines or directions that are parallel or aligned with the longitudinal axis of rotation of the tire building drum.

"Bead" means that part of the tire comprising an annular tensile member commonly referred to as a "bead core" wrapped by ply cords and shaped, with or without other reinforcement elements such as flippers, chippers, apexes, toe guards and chafers, to fit the design rim.

"Circumferential" means lines or directions extending along the perimeter of the surface of the tire building drum or annular tread perpendicular to the axial direction.

"Radial" and "radially" mean directions radially toward or away from the axis of rotation of the tire building drum.

### Brief Description of the Drawings

The invention will be described by way of example and with reference to the accompanying drawings in which:
Figure 1 is a cross-sectional side view of a tire building drum shown in the start position;
Figure 2 is a perspective view of the hub subassembly of the tire building drum of Figure 1, shown with the center section removed;
Figure 3 is an exploded view of one half of the hub subassembly of the tire building drum;
Figure 4 is cross-sectional view of one half of the hub sub assembly of Figure 3;
Figure 5A is a front view of the hub subassembly of Figure 3 shown in the contracted position;
Figure 5B is a cross-sectional view of the hub subassembly in the direction 5b-5b of Figure 2;
Figure 6A is a front view of the hub subassembly of Figure 3 shown in the expanded position; and
Figure 6B is a cross-sectional view of the hub subassembly of Fig 5B shown in the actuated position;

### Detailed Description of the Invention

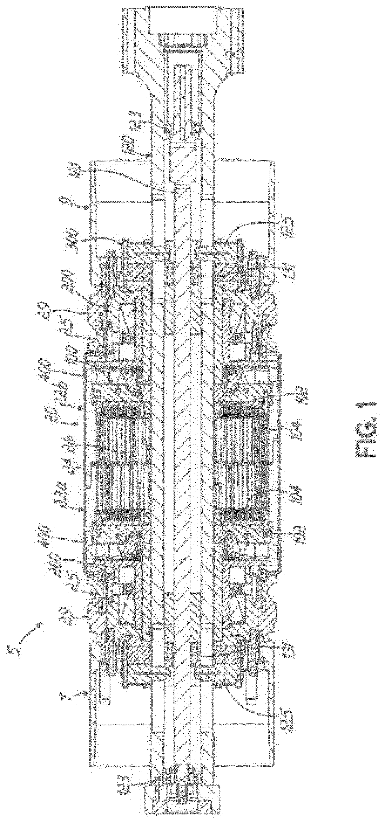

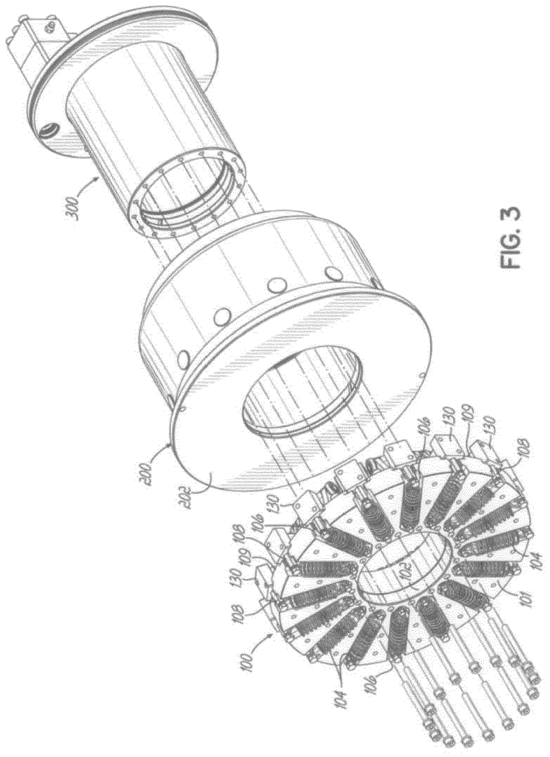

With reference to Figures 1 through 6, an exemplary tire building drum 5 of the present invention is illustrated. As shown more particularly in Figure 1, the tire building drum 5 has a left hand side 7 and a right hand side 9 joined together by a center section 20. Adjacent the center section 20 are first and second bead locking mechanisms 25, which are also radially movable. Adjacent the bead locking mechanisms are first and second shoulder segments 29. Both the bead locking mechanisms 25 and the shoulder segments 29 are axially movable. Thus, both the left hand side and the right hand side of the drum are axially movable. These components are described in more detail, below.

### Center Section

The center section 20 of the tire building drum further comprises a plurality of center segments 22 located about the outer circumference of the drum. Each of the center segments are split into a left hand side 22a and a right hand side 22b, as shown in Figure 1. Each side 22a, 22b has one or more finger-like projections 24 which are axially slidable into one or more opposed recesses 26 in an interdigitated or interlocked manner, so that the center section may axially expand or contract.

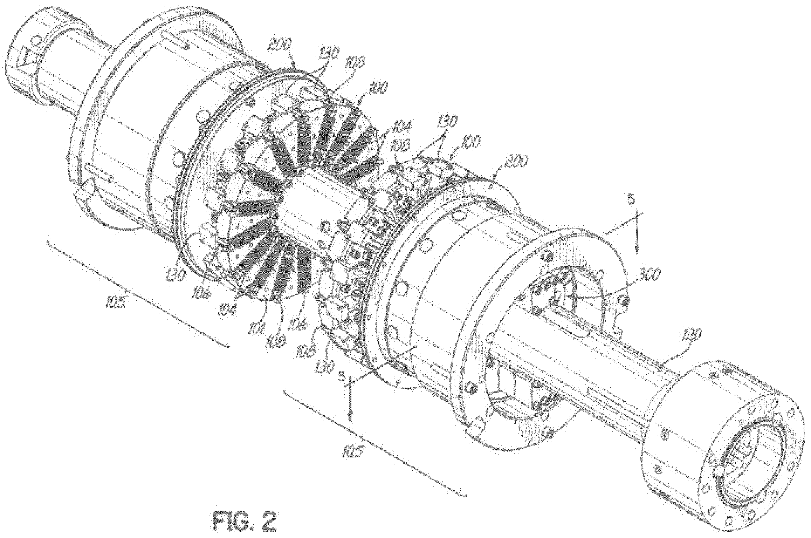

The right hand side 22b and the left hand side 22a of the center section are also radially expandable or contractable. The center section 20 may radially expand in the range of from 20 to 50 mm. As each center segment 22 radially expands, the gap between center segments increases. Each center segment half 22a, 22bb has an axially outer end that is connected to an expansion deck 100. Figure 2 illustrates the hub subassemblies 105 for each drum half, wherein each hub subassembly includes an expansion deck 100. The expansion deck 100 radially expands and contracts the center section segments. The expansion deck has an inner hub 102 that is mounted on the central drive shaft 120. As shown in figure 2, each expansion deck 100 has a plurality of radially mounted springs 104 on a first side 101. Each spring is mounted in a slot 106. A first end 103 of the spring is pinned to a pin 107 located in the lower end of the slot 106. A second end 105 of the spring 104 is mounted to a radially outward pin 108. Pin 108 is connected to a lifter housing 130 located on the second side 109 of the expansion deck 100, opposite the first side 101. A lifter housing 130 is associated with each spring 104. Each spring 104 biases a respective lifter housing 130 into its radially inward position. Both the right hand side and the left hand side of the center section are connected to an expansion deck, so that each lifter housing functions to radially expand the center section in unison.

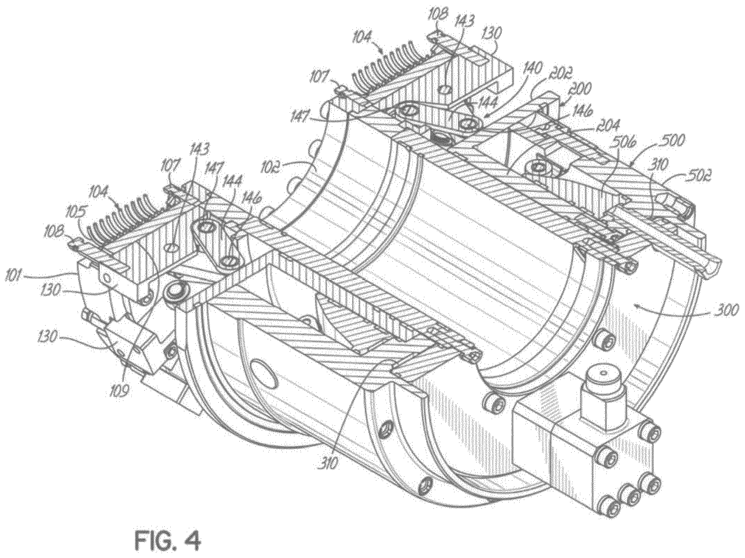

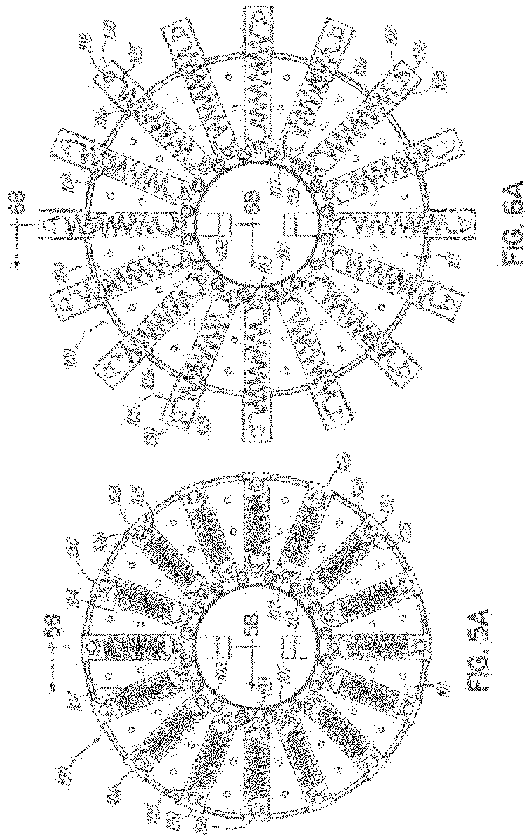

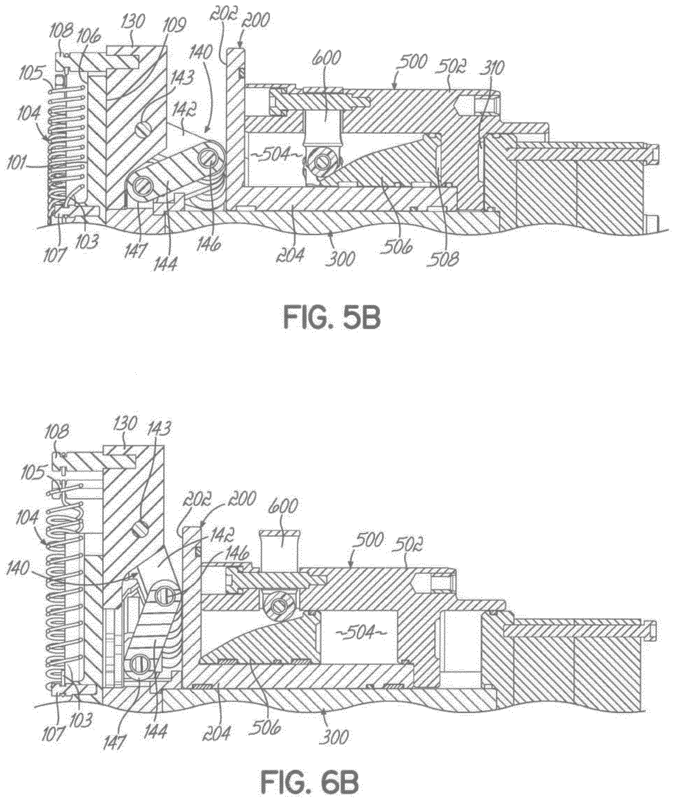

As shown in Figure 4, each lifter housing 130 is actuated by a linkage system 140. Figure 5b illustrates the lifter housing 130 and the linkage system 140 in the collapsed position. The linkage system has a first link 142 having a first pinned end 143 connected to the lifter housing 130. The first link is connected to a second link 144 by a pinned connection 146. The radially inner end 147 of the second link 144 is pinned to the inner hub 102 of the expansion deck 100. The linkage system 140 is actuated by a sliding cylinder 200. The sliding cylinder 200 has a front face 202 that engages the linkage system 140. The sliding cylinder 200 has an outer sleeve 204 that slides on the inner drum sleeve 300. The sliding cylinder 200 is pneumatically actuated by gas or air fed to pocket 310, causing the outer sleeve 204 to slide over the inner drum sleeve 300. There are two sliding cylinders 200, one on the left and right hand side. Actuation of both sliding cylinders at the same time ensures that the right hand side and left hand side of the center section radially expands at the same time. When the sliding cylinder 200 is actuated, the outer sleeve 204 slides axially inward so that the front face 202 of the sliding cylinder engages the linkage system 140. The second link 144 is caused to be rotated about its pinned end 147, resulting in the radial extension of the first and second link 142, 144 in the radial direction. The lifter housing 130 extends radially outward, overcoming the force of spring 104. The radial expansion of each lifter housing 130 as shown in Figure 6b results in the crowning of the center section 20 as shown in Figure 6A.

As shown in Figure 1, the outer exterior surface of the center section is not covered by a center sleeve. The outer axial ends of the center section are covered by a shoulder seal 400.

### BEAD LOCK MECHANISM

Adjacent the center section 20 are first and second annular bead locking mechanisms 25. Figure 1 illustrates the bead locking mechanisms 25 in the retracted position. Figure 5B illustrates the bead lock actuation system 500. The bead lock actuation system 500 is mounted over the sliding sleeve 300. An annular bead lock housing 502 encloses the sliding sleeve 200 forming an annular piston chamber 504. A slidable piston 506 is received in the chamber. The slidable piston 506 is actuated by air or gas inserted into recess 508. Figure 6B illustrates the slidable piston in the actuated position, which forces a roller 600 to roll up the surface of the position into the actuated position. The roller 600 is connected to the bead locking mechanisms 25, so that actuation of the roller 600 results in the radially expansion of the bead locking mechanisms 25.

### Drum Axial Expansion and Contraction

The entire left and right hand sections 7, 9 of the tire building drum are axially slidable. The axial sliding of each drum half is actuated by drive pins 125 mounted on nuts 131, which ride along drive screw 121. When the central screw is rotated, the nuts 131 move axially inward/outward, causing the drive pins 125 and each drum section to move axially inward/outward in corresponding fashion. In addition, the drive pins are also in mechanical cooperation with the split center segments, causing the split center segments 22a, 22b to axially extend or contract.

### Drive Shaft

A central drive shaft 120 is provided for rotational movement of the tire building drum 5 about its longitudinal axis. The central shaft 120 is connected to a drive means (not shown). Provided within the central drive shaft 120 is a central screw 121. The central screw 121 is supported at each end by bearings 123. The threads on one side of the central screw 121 are left handed and on the opposite side are right handed. On the left hand side is an inboard nut 131 connected to the one end of the threaded screw 121 and similarly on the opposite right hand side is an outboard ball nut 131 connected to the central screw 121.

## Claims

1. A tire building drum comprising a rotatable drum (5) having a center section (20) and a left section (29) located on the left side of the center section (20) and a right section (29) located on the right side of the center section (20), wherein the right and left sections (29) are movable in the axial direction and wherein the center section (20) is radially expandable, wherein the center section (20) further comprises a first half (22a) and a second half (22b), wherein the first half and the second half (22a, 22b) are axially movable with respect to each other so that the center section (20) has an adjustable width, wherein the right and left sections (22a, 22b) each have an axially outer end that is connected to an expansion deck (100) and each have a radially expandable bead lock mechanism (25), wherein the bead lock mechanisms (25) are axially movable independent of each other, wherein the first half and the second half of the center section (20) are each connected to a plurality of lifter housings (130), and wherein each lifter housing (130) is radially expandable and is connected to a linkage system (140), **characterized in that** each expansion deck (100) has a plurality of radially mounted springs (104) on a first side, said springs (104) biasing the lifter housing (130) radially inward.

2. The tire building drum of claim 1 wherein a slidable cylinder (200) having a front face (202) is provided for engaging the linkage system (130) and for rotating a first linkage (142) radially outward.

3. The tire building drum of claim 1 or 2 wherein the linkage system (140) includes a first link (142) having a first end (143) pivotally connected to the lifter housing (130) and a second end (144) pivotally connected to the first end of a second link (144), wherein the second end of the second link is pivotally connected to a fixed point.

4. The tire building drum of claim 2 or 3 wherein the bead lock mechanism (25) is mounted on the slidable cylinder (200).

5. The tire building drum of at least one of the previous claims wherein the bead lock mechanism (25) has a radially inward roller (600) positioned for engagement with a piston (506).

6. The tire building drum of claim 5 wherein the piston (506) is slidably mounted in a chamber (504), wherein the chamber (504) is mounted on the slidable cylinder (200).

7. The tire building drum of at least one of the previous claims wherein the center section (20) does not have a center sleeve that extends the full width of the center section (20).

8. The tire building drum of at least one of the previous claims wherein a shoulder sleeve (204) is located on each axially outer end of the center section (20), but does not extend over the center section (20).

## Patentansprüche

1. Reifenbautrommel, umfassend eine rotierbare Trommel (5), die einen zentralen Abschnitt (20) und einen an der linken Seite des zentralen Abschnitts (20) befindlichen linken Abschnitt (29) und einen an der rechten Seite des zentralen Abschnitts (20) befindlichen rechten Abschnitt (29) aufweist, wobei der rechte und der linke Abschnitt (29) in axialer Richtung bewegbar sind und wobei der zentrale Abschnitt (20) radial aufweitbar ist, wobei der zentrale Abschnitt (20) weiter eine erste Hälfte (22a) und eine zweite Hälfte (22b) umfasst, wobei die erste Hälfte und die zweite Hälfte (22a, 22b) in Bezug zueinander axial bewegbar sind, sodass der zentrale Abschnitt (20) eine verstellbare Breite aufweist, wobei der rechte und der linke Abschnitt (22a, 22b) jeder ein axial äußeres Ende aufweisen, das mit einem Aufweitdeck (100) verbunden ist, und jeder einen radial aufweitbaren Wulstverriegelungsmechanismus (25) aufweist, wobei die Wulstverriegelungsmechanismen (25) unabhängig voneinander axial bewegbar sind, wobei die erste Hälfte und die zweite Hälfte des zentralen Abschnitts (20) jede mit einer Vielzahl von Hebemittelgehäusen (130) verbunden sind, und wobei jedes Hebemittelgehäuse (130) radial aufweitbar ist und mit einem Gestängesystem (140) verbunden ist, **dadurch gekennzeichnet, dass** jedes Aufweitdeck (100) eine Vielzahl radial montierter Federn (104) an einer ersten Seite aufweist, wobei die Federn (104) das Hebemittelgehäuse (130) radial einwärts vorspannen.

2. Reifenbautrommel nach Anspruch 1, wobei ein verschiebbarer Zylinder (200), der eine Stirnfläche (202) aufweist, vorgesehen ist, um an dem Gestängesystem (130) anzugreifen und um ein erstes Gestänge (142) radial auswärts zu rotieren.

3. Reifenbautrommel nach Anspruch 1 oder 2, wobei das Gestängesystem (140) ein erstes Verbindungsglied (142) beinhaltet, das ein schwenkbar mit dem Hebemittelgehäuse (130) verbundenes erstes Ende (143) und ein schwenkbar mit dem ersten Ende eines zweiten Verbindungsgliedes (144) verbundenes zweites Ende (144) aufweist, wobei das zweite Ende des zweiten Verbindungsgliedes schwenkbar mit einem festen Punkt verbunden ist.

4. Reifenbautrommel nach Anspruch 2 oder 3, wobei der Wulstverriegelungsmechanismus (25) an dem verschiebbaren Zylinder (200) montiert ist.

5. Reifenbautrommel nach mindestens einem der vorhergehenden Ansprüche, wobei der Wulstverriegelungsmechanismus (25) eine radial einwärts befindliche Rolle (600) aufweist, die zum Eingriff mit einem Kolben (506) angeordnet ist.

6. Reifenbautrommel nach Anspruch 5, wobei der Kolben (506) verschiebbar in einer Kammer (504) montiert ist, wobei die Kammer (504) an dem verschiebbaren Zylinder (200) montiert ist.

7. Reifenbautrommel nach mindestens einem der vorhergehenden Ansprüche, wobei der zentrale Abschnitt (20) keine zentrale Hülse aufweist, die sich über die volle Breite des zentralen Abschnitts (20) erstreckt.

8. Reifenbautrommel nach mindestens einem der vorhergehenden Ansprüche, wobei sich eine Schulterhülse (204) an jedem axial äußeren Ende des zentralen Abschnitts (20) befindet, sich jedoch nicht über den zentralen Abschnitt (20) erstreckt.

## Revendications

1. Tambour de confection de bandage pneumatique comprenant un tambour rotatif (5) possédant un tronçon central (20) et un tronçon gauche (29) situé sur le côté gauche du tronçon central (20) et un tronçon droit (29) situé sur le côté droit du tronçon central (20) ; dans lequel les tronçons droit et gauche (29) sont mobiles dans la direction axiale ; et dans lequel le tronçon central (20) est capable de se déployer en direction radiale ; dans lequel le tronçon central (20) comprend en outre une première moitié (22a) et une seconde moitié (22b) ; dans lequel la première moitié et la seconde moitié (22a, 22b) sont mobiles en direction axiale l'une par rapport à l'autre d'une manière telle que le tronçon central (20) possède une largeur réglable ; dans lequel les tronçons droit et gauche (22a, 22b) possèdent chacun une extrémité externe en direction axiale qui est reliée à un pont de déploiement (100) et chacun possède un mécanisme de verrouillage de talon (25) capable de se déployer en direction radiale ; dans lequel les mécanismes de verrouillage de talons (25) sont mobiles en direction axiale indépendamment l'un de l'autre ; dans lequel la première moitié et la seconde moitié du tronçon central (20) sont chacune reliées à plusieurs logements de dispositifs de levage (130) ; et dans lequel chaque logement de dispositif de levage (130) est capable de se déployer en direction radiale et est relié à un système d'articulation (140) ; **caractérisé en ce que** chaque pont de déploiement (100) possède plusieurs ressorts (104) montés en direction radiale sur un premier côté, lesdits ressorts (104) mettant le logement de dispositif de levage (130) en état de précontrainte vers l'intérieur en direction radiale.

2. Tambour de confection de bandage pneumatique selon la revendication 1, dans lequel on prévoit un cylindre coulissant (200) possédant une face avant (202) pour une mise en contact avec le système d'articulation (130) et pour une mise en rotation d'une première articulation (142) vers l'extérieur en direction radiale.

3. Tambour de confection de bandage pneumatique selon la revendication 1 ou 2, dans lequel le système d'articulation (140) englobe une première articulation (142) possédant une première extrémité (143) reliée en pivotement au logement de dispositif de levage (130) et une seconde extrémité (144) reliée en pivotement à la première extrémité d'une seconde articulation (144), la seconde extrémité de la seconde articulation étant reliée en pivotement à un point fixe.

4. Tambour de confection de bandage pneumatique selon la revendication 2 ou 3, dans lequel le mécanisme de verrouillage de talon (25) est monté sur le cylindre coulissant (200).

5. Tambour de confection de bandage pneumatique selon au moins une des revendications précédentes, dans lequel le mécanisme de verrouillage de talon (25) possède un galet (600) interne en direction radiale disposé à des fins de mise en contact avec un piston (506).

6. Tambour de confection de bandage pneumatique selon la revendication 5, dans lequel le piston (506) est monté en coulissement dans une chambre (504), dans lequel la chambre (504) est montée sur le cylindre coulissant (200).

7. Tambour de confection de bandage pneumatique selon au moins une des revendications précédentes, dans lequel le tronçon central (20) ne possède pas un manchon central qui s'étend sur toute la largeur du tronçon central (20).

8. Tambour de confection de bandage pneumatique selon au moins une des revendications précédentes, dans lequel un manchon d'épaulement (204) est disposé sur chaque extrémité externe en direction axiale du tronçon central (20), mais ne s'étend pas pardessus le tronçon central (20).
